# EUROPEAN PATENT APPLICATION

(11) **EP 2 613 588 A1**
(43) Date of publication of application: **10.07.2013**
(21) Application number: 12305017.1
(22) Date of filing: 06.01.2012
(51) Int. Cl.: H04W 36/32, H04W 36/04, H04W 48/04

(54) **Improved handling of high-speed users within a heterogeneous mobile network by means of pico cell's Almost Blank Subframes**

(71) Applicant: Alcatel Lucent, 75007 Paris (FR)
(72) Inventor: Bakker, Hajo-Erich, 71735 Eberdingen (DE); Braun, Volker, 70176 Stuttgart (DE); Weber, Andreas, 74251 Lehrensteinsfeld (DE); Stanze, Oliver, 70499 Stuttgart (DE)
(74) Representative: ALU Antw Patent Attorneys

(57) **Abstract**

The present invention relates to a method and apparatus for managing mobility within a macro cell (C1) having a large radio coverage area (210).

A radio communication channel is set up with a particular mobile device (UE1), and the particular mobile device is characterized as being a high-speed mobile device. A measurement event for the particular mobile device is detected, whereby a neighboring cell (C2) was measured as being offset better than the macro cell. The neighboring cell is characterized as having a substantially shorter radio coverage area (220) enclosed by the large radio coverage area, and further as having a blank communication time slot with reduced or no transmission power.

Upon detection of the measurement event, the particular mobile device keeps on being served by the macro cell, yet the particular mobile device is re-schedule during the blank communication time slot of the neighboring cell.

When the macro cell is measured as being again offset better than the neighboring cell, or alternatively upon expiry of an average or maximum resting time of high-speed mobile devices in the neighboring cell or in a representative pico cell, the particular mobile device stops being scheduled during the blank communication time slot of the neighboring cell.

## Description

### Technical Field of the Invention

The present invention relates to an apparatus and method for managing mobility within a mobile communication network.

### Technical Background of the Invention

Thanks to higher spatial reuse of spectrum, short-radius cells in the range of 50 to 100 meters appear as a promising solution to satisfy bandwidth extensive traffic demands and to enhance the Quality of Experience (QoE) of mobile users.

Heterogeneous Networks (HetNet) are now being deployed, where cells of smaller footprint size (so-called pico or micro cells) are embedded within the coverage area of larger umbrella cells (so-called macro cells), primarily to provide increased capacity in targeted area of data traffic concentration. HetNet try to exploit the spatial variation in user and traffic distribution to efficiently increase the overall capacity of mobile networks.

However, operating high density of pico cells raises major issues not only in terms of radio interference but also in terms of mobility management. Given the short distance separating neighboring pico cells, high-speed users are expected to cross a large number of pico cells in a short time frame. Indeed, the handover rate increases with the user speed and with the inverse of the inter-cell distance.

In this context, guaranteeing a steady QoE to high-speed users moving through a HetNet becomes challenging: cell re-selection, Radio Resource Control (RRC) reconfiguration, attachment to the new cell have to be performed in a very short time to maintain call connection and to avoid Radio Link Failures (RLF).

The known solutions to this problem are:
- [Fast HO] The handover procedure is speed up to ensure rapid re-attachment to the most suitable target cell, while preventing unreliable handover attempts.
- [Black List] Pico cells are black-listed for high-speed users.
- [VC] Multiples pico cells are combined into one single aggregated Virtual Cell (VC).

Fast HO encompasses any mechanism that accelerates the handover. However, it proves inefficient at high speeds. Indeed, handover duration can amount up to 1 second. At 90 km/h, the user would have traveled about 25 meters, which is a very long distance when compared to typical cell radius of pico cells.

Added to this, physical layer measurements can be critically affected by distance dependent fading, shadowing, etc. So, handover thresholds have to account for these radio fluctuations and cannot be arbitrarily reduced.

Alternatively, pico cells can be black-listed for high-speed users so as no handover alarm is reported for those cells as they are crossed, meaning high-speed users keep on being handled by the macro cell no matter what the path loss difference is between the macro cell and the respective pico cells, while low-speed users are advantageously handled by pico cells.

The concept of Virtual Cells (VC) was first described in the article entitled *"*Handoff in virtual cells system based on Distributed antenna" from Y. Mo, J. xie and B. Huang, published by Wicom in 2006. VC are a set of cooperating radio cells and radio base stations that are seen by the mobile as a single distributed base station. Inside the VC, the mobile can move across the cells without performing handovers. Handover is only performed at VC boundaries. In this way, handover rate is significantly reduced.

VC based handover solution relies on distributed architectures with distributed antennas structure. Added to this, implementation complexity arises from the construction and selection of the VC.

### summary of the Invention

It is an object of the present invention to improve mobility and QoE of high-speed users within a HetNet.

In accordance with a first aspect of the invention, a radio access arrangement for operating a macro cell having a large radio coverage area comprises a radio transceiver for setting up a radio communication channel with a particular mobile device, speed characterization logic for characterizing the particular mobile device as being a high-speed mobile device according to speed information indicative of a speed of the particular mobile device, and a radio resource controller for detecting a measurement event for the particular mobile device whereby a neighboring cell was measured as being offset better than the macro cell.

The radio access arrangement further by the cell characterization unit 150 comprises cell characterization logic for characterizing the neighboring cell as having a substantially shorter radio coverage area enclosed by the large radio coverage area, and further as having a blank communication time slot with reduced or no transmission power. The radio resource controller is further configured, upon detection of the measurement event, to keep the particular mobile device served by the macro cell and to re-schedule the particular mobile device during the blank communication time slot of the neighboring cell.

In accordance with another aspect of the invention, a method for managing mobility within a macro cell having a large radio coverage area comprises the steps of setting up a radio communication channel with a particular mobile device, characterizing the particular mobile device as being a high-speed mobile device according to speed information indicative of a speed of the particular mobile device, and detecting a measurement event for the particular mobile device whereby a neighboring cell was measured as being offset better than the macro cell.

The method further comprises the steps of characterizing the neighboring cell as having a substantially shorter radio coverage area enclosed by the large radio coverage area, and further as having a blank communication time slot with reduced or no transmission power, and upon detection of the measurement event, keeping the particular mobile device served by the macro cell and re-scheduling the particular mobile device during the blank communication time slot of the neighboring cell.

In one embodiment of the invention, the radio access arrangement further comprises measurement configuration logic for configuring a measurement policy for the particular mobile device whereby periodic measurements of the macro cell and the neighboring cell are to be reported from the detection of the measurement event onwards.

The radio resource controller is further configured to detect a subsequent measurement event for the particular mobile device whereby the macro cell was measured as being offset better than the neighboring cell, and upon detection of the subsequent measurement event, to stop scheduling the particular mobile device during the blank communication time slot of the neighboring cell.

In an alternative embodiment of the invention, the radio resource controller is further configured to stop scheduling the particular mobile device during the blank communication time slot of the neighboring cell upon expiry of an average or maximum resting time of high-speed mobile devices in the neighboring cell or in a representative pico cell.

In one embodiment of the invention, the radio access arrangement further comprises communication means for, upon detection of the measurement event, requesting a neighboring radio access node operating the neighboring cell to activate the blank communication time slot.

In one embodiment of the invention, the neighboring cell is characterized as having a substantially shorter radio coverage area enclosed by the large radio coverage area by detecting back and forth handovers between the macro cell and the neighboring cell within a reference resting time.

In an alternative embodiment of the invention, the neighboring cell is characterized as having a substantially shorter radio coverage area enclosed by the large radio coverage area by means of pre-configured cell information.

In one embodiment of the invention, the neighboring cell is characterized as having the blank communication time slot by means of a status message received from a neighboring radio access node operating the neighboring cell.

In an alternative embodiment of the invention, the neighboring cell is characterized as having the blank communication time slot by means of further pre-configured cell information.

In one embodiment of the invention, the speed information comprises resting times of the particular mobile device in previously visited cells.

The radio access arrangement may form part of a radio access node operating the macro cell, such as an evolved NodeB (eNB) for Long Term Evolution (LTE) networks, or is distributed over a radio access node operating the macro cell, such as a Base Transceiver Station (BTS) for Global System for Mobility (GSM) networks or a NodeB (NB) for Universal Mobile Terrestrial System (UMTS) networks, and a radio access controller controlling the operation of the radio access node, such as a Base Station Controller (BSC) for GSM networks or a Radio Network Controller (RNC) for UMTS networks.

Embodiments of a method according to the invention correspond with the embodiments of a radio access arrangement according to the invention.

The 3rd Generation Partnership Project (3GPP) has introduced the concept of Almost Blank Sub-frames (ABS) for Inter-Cell Interference Coordination (ICIC) in single-carrier Hetnet.

ICIC has the task to manage radio resources such that inter-cell interference is kept under control. ICIC mechanism includes a frequency domain component and a time domain component. ICIC is inherently a multi-cell RRM function that needs to take into account information (e.g., the resource usage status) from multiple cells.

Frequency domain ICIC manages radio resources, notably the radio resource blocks, such that multiple cells coordinate their respective use of the radio frequency spectrum.

Time domain ICIC manages sub-frame utilization (a sub-frame is a 1 ms slot comprising 14 OFDM data symbols) across different cells through backhaul signaling, or through configuration of so-called ABS patterns. ABS are sub-frames with reduced transmit power (including no transmission) on some physical channels and/or reduced activity. The eNB ensures backwards compatibility towards UEs by transmitting necessary control channels and physical signals as well as system information. The ABS in an aggressor cell is used to protect the radio resources of a corresponding sub-frame in a victim cell receiving strong interference from the aggressor cell.

So far, 3GPP describes the use case of a mobile device at the edge of a pico cell, wherein the interference from the overlaying macro cell is substantial. The pico cell is then expected to schedule the mobile device during an ABS of the macro cell.

The present invention proposes to configure one or more ABS within a pico cell for use by high-speed users: the high-speed users are handled by the macro cell no matter how strong the traversed pico cell is, yet they are scheduled during the pico cell's ABS while they are crossing the radio coverage area of the pico cell.

The crossing of a pico cell area by a high-speed users is detected by means of measurement events (or handover alarms) as reported by the UE and/or the serving eNB. When the high-speed user enters a pico cell area, a first measurement event, whereby the pico cell was measured as being better than the serving macro cell by a first non-negative offset, is issued. This first handover alarm is ignored, and the high-speed mobile device keeps on being served by the macro cell. Yet, from this first measurement event onwards, the serving eNB re-schedules the hi gh-speed UE du ri ng an ABS of the pi co cell, and till the UE exits the radio coverage area of the pico cell, that is to say till detection of a second measurement event, whereby the macro cell was measured as being better than the pico cell by a second non-negative offset, or alternatively till the expiry of an average or maximum resting time of high-speed users in that pico cell or in a representative pico cell.

The serving eNB may keep on scheduling the high-speed UE during an ABS of the pico cell even after the UE exits the pico cell area, yet this may prevent the subsequent re-use of that ABS for another high-speed user.

Also, the serving eNB may request the neighboring eNB operating the pico cell to activate the ABS upon entry into the pico cell area, and to deactivate the ABS upon exit from the pico cell area. By doing so, the pico cell is allowed to use that sub-frame in case of e.g. high traffic load.

The present invention invention is advantageous in that the probability of call drop is greatly reduced for high-speed users as no handover take place although numerous pico cells are being traversed, and in that the QoE of high-speed users is improved as they do no longer experience radio interference from the traversed pico cells.

The present invention is further advantageous in that the pico cells do not need to be black-listed for high-speed users as per the prior art, thereby easing network planning and configuration.

### Brief Description of the Drawings

The above and other objects and features of the invention will become more apparent and the invention itself will be best understood by referring to the following description of an embodiment taken in conjunction with the accompanying drawings wherein:
- fig. 1 represents an LTE mobile network,
- fig. 2 represents an eNB as per the present invention,
- fig. 3 represents a radio coverage area comprising a macro cell and a pico cell, and
- fig. 4 represents a message flow chart.

### Detailed Description of the Invention

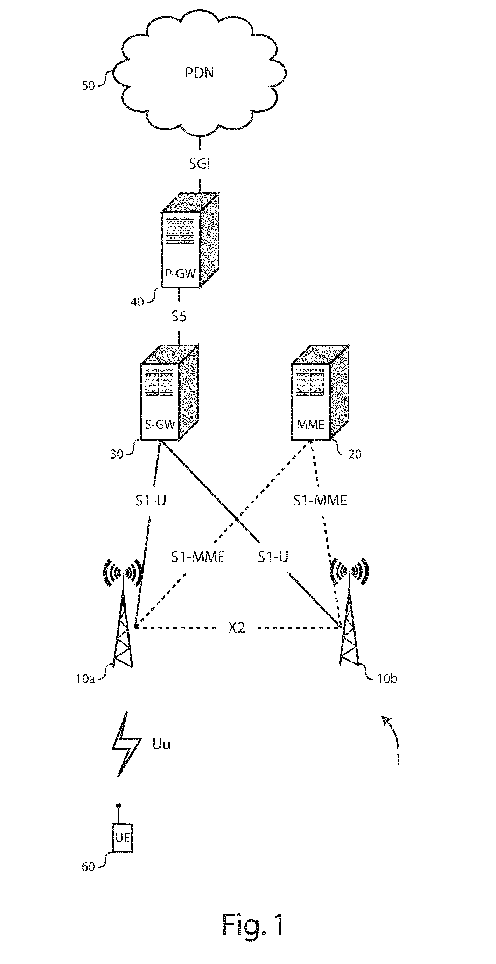

There is seen in fig. 1 a part 1 of an Evolved Radio Access Network (E-RAN) and of an Evolved Packet Core (EPC) comprising the following network elements:
- eNBs 10,
- an MME 20,
- a Serving Gateway (S-GW) 30,
- a Packet Data Network (PDN) Gateway (P-GW) 40, and
- a UE 60.

The eNBs 10 are coupled to the MME 20 through an S1-MME interface, and to the S-GW 30 through an S1-U interface. The S-GW 30 is further coupled to the P-GW 40 through an S5 interface. The P-GW 40 is further coupled to a PDN 50 through an SGi interface. The neighboring eNBs 10 establish neighbor relationships through an X2 interface.

The eNBs 10 operate macro or pico cells with a radio coverage area ranging from a few kilometers up to a few tens meters. The eNBs 10 are configured to set up and operate a radio communication channel (i.e., a set of downlink and uplink traffic radio resources) with the UE 60 through a Uu radio interface.

More noticeably, each of the eNBs 10 hosts the following functions:
- Radio Resource Control (RRC): radio bearer control, radio admission control, connection mobility control, dynamic allocation of resources to UEs in both uplink and downlink (scheduling);
- Routing of user-plane data towards the S-GW;
- Scheduling and transmission of paging messages from the MME;
- Scheduling and transmission of broadcast information;
- Measurement and measurement reporting configuration for mobility and scheduling.

The MME 20 hosts the following functions:
- Non Access Stratum (NAS) signaling;
- Idle mode UE reachability, including control and execution of paging retransmission;
- Tracking Area (TA) list management for UE in idle and active mode;
- S-GW selection;
- MME selection for inter-MME handovers;
- Roaming;
- Authentication;
- Bearer management functions including dedicated bearer establishment.

The S-GW 30 hosts the following functions:
- Local mobility anchor point for inter-eNB handover;
- E-UTRAN idle mode downlink packet buffering and initiation of network triggered service request procedure;
- Lawful interception;
- Packet routing and forwarding;
- Transport level packet marking in the uplink and the downlink;
- downlink and uplink charging per UE, PDN, and Quality of Service (QoS) class Identifier (QCI).

The P-GW 40 hosts the following functions:
- UE IP address allocation and IP anchor point;
- Per-user based packet filtering (e.g., by means of deep packet inspection);
- Lawful interception;
- Downlink and uplink service level charging, gating and rate enforcement.

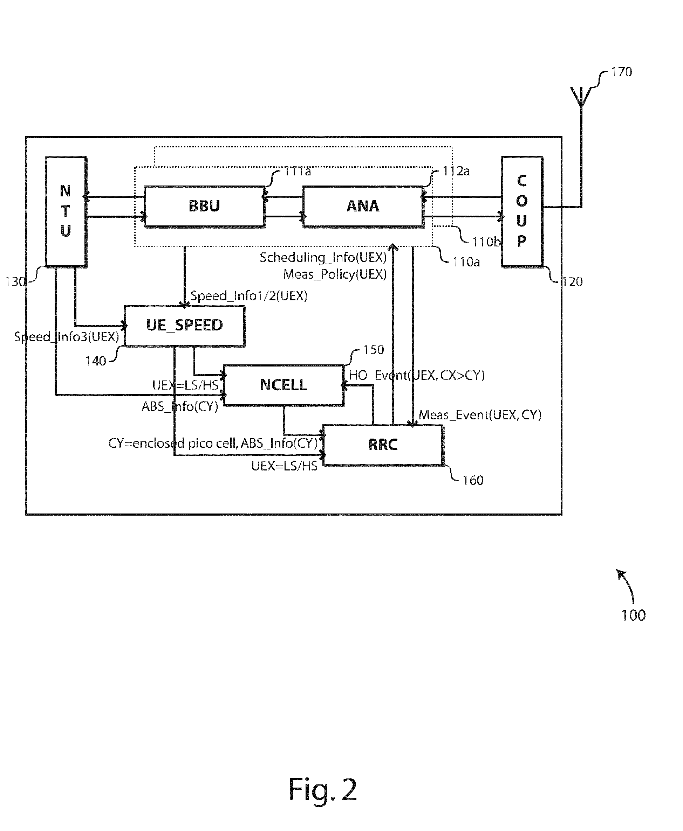

There is seen in fig. 2 further details about an eNB 100 as per the present invention, and configured to operate a macro cell CX.

The eNB 100 comprises the following functional blocks:
- one or more transceivers 110, each one comprising a digital base-band unit 111 (or BBU) and an analog band-pass unit 112 (or ANA),
- a coupling unit 120 (or COUP),
- a network termination unit 130 (or NTU),
- a UE speed characterization unit 140 (or UE_SPEED),
- a neighboring cell characterization unit 150 (or NCELL), and
- a radio resource controller 160 (or RRC).

The network termination unit 130 is coupled to the digital base-band unit 111, the digital base-band unit 111 is coupled to the analog band-pass unit 112, the analog band-pass unit 112 is coupled to the coupling unit 120, and the coupling unit 120 is coupled to an external or internal antenna 170. The speed characterization unit 140 and the radio resource controller 160 are coupled to the transceivers 110. The UE speed characterization unit 140 is further coupled to the network termination unit 130, to the neighboring cell characterization unit 150 and to the radio resource controller 160. The neighboring cell characterization unit 150 is further coupled to the network termination unit 130 and to the radio resource controller 160.

The transceivers 110 are configured to establish and operate radio communication channels with UEs under control of the radio resource controller 160.

The digital base-band unit 111 is for digitally processing the received and transmit data symbols. The digital 1 base-band unit 111 implements the necessary protocol suites for issuing, terminating or relaying data and control packets.

The analog band-pass unit 112 is for modulating, amplifying and shaping the transmit signal that ultimately feds the antenna 170, and for filtering, amplifying with as little noise as possible and demodulating the received signal from the antenna 170. The analog band-pass 112 unit can be merged with the digital base-band unit, or can be moved closer to the antenna in a so-called Remote Radio Head-end (RRH) configuration.

The coupling unit 120 is for combining and passing the transmit signals from the transceivers 110 towards the antenna 170, and for dispatching the receive signal from the antenna 170 towards the transceivers 110.

The network termination unit 130 accommodates the appropriate Medium Access Control (MAC) and Physical transport (PHY) layers for connecting to a PDN, as well as some frame dispatching logic for routing the incoming/outgoing frames towards the appropriate Input/output (I/O) ports.

The UE speed characterization unit 140 is configured to characterize a particular UE UEX as belonging to a low-speed category LS or a high-speed category HS by comparing the UE speed to a reference speed threshold. If the UE speed is greater than the reference speed threshold, then the UE is classified as a high-speed UE (HS), else as a low-speed UE (LS).

The UE speed characterization unit 140 may determine the UE speed category according to first speed information speed_Info1 supplied by the UE (e.g., as estimated from GPS positioning data), and/or according to second speed information Speed_Info2 determined by the eNB 100 (e.g., the Doppler frequency shift is indicative of the radial UE speed with respect to the eNB 100), and/or according to third speed information Speed_Info3 relayed by a source eNB during a handover procedure towards the target cell CX (e.g., as derived from the time spent in previous visited cells, or as explicitly encoded by the source eNB).

The UE speed category is passed to the radio resource controller 160 for further radio resource assignment, or to the neighboring cell characterization unit 150 for further cell characterization (see "UEX=LS/HS" in fig. 2).

The neighboring cell characterization unit 150 is for determining whether a neighboring cell CY is a pico cell with a radio coverage area that is embraced by the radio coverage area of the macro cell CX.

During a preliminary auto-learning phase, the neighboring cell characterization unit 150 is notified about handover events that took place towards or from the neighboring cell CY that is being characterized, as well as their respective timing (see "HO_Event(UEX, CX>CY)" in fig. 2).

The neighboring cell characterization unit 150 determines statistical properties about these handover events, such as the proportion of ping-pong handovers between the macro cell CX and the neighboring cell CY involving a high-speed UE, as well as the average resting time of the high-speed UEs within the neighboring cell CY. These statistical 1 properties are used by the neighboring cell characterization unit 150 to characterize the neighboring cell CY as being a pico cell enclosed by the macro cell CX or not. For instance, if the proportion of ping-pong handovers between the macro cell CX and the neighboring cell CY involving a high-speed UE is above a reference threshold, and if the average resting time is below a reference resting time, then the neighboring cell CY is characterized as being a pico cell enclosed by the macro cell CX.

During this preliminary auto-learning phase, the eNB 100 lets the UEs, no matter what their speed is, be handed over towards a neighboring target cell that is being characterized so as to collect enough statistics about that cell and its radio coverage properties. Once the characterization of the target cell completes, the UEs are handled as per the present invention.

The neighboring cell characterization unit 150 is for further determining whether an ABS is configured for a neighboring cell. This piece of information is obtained by means of a LOAD INFORMATION message received through a X2 interface from a neighboring eNB operating the neighboring pico cell (see "ABS_Info(CY)" in fig. 2). If the ABS INFORMATION Information Element (IE) is included in the LOAD INFORMATION message, the ABS PATTERN INFO IE indicates the sub-frame numbers designated as almost blank by the neighboring eNB for the purpose of interference coordination.

Alternatively, the neighboring cell characterization unit 150 may use pre-configured cell information, for instance as obtained from a network manager or from a network planning tool, in order to determine whether a neighboring cell is a pico cell enclosed by the macro cell, and/or whether the pico cell has one or more pre-configured ABS.

The result of the neighboring cell characterization is passed to the radio resource controller 160 for further radio resource assignment (see "CY=enclosed pico cell, ABS_info(CY)" in fig. 2).

The radio resource controller 160 is for assigning and managing downlink and uplink radio resources used by the transceivers 110 and the respective UEs for radio communication over the air interface, that is to say a set of time and/or frequency resources assigned to the respective Radio Access Bearers (RAB) for transport of user traffic (see "Scheduling_Info(UEX)" in fig. 2).

Radio Resource Management (RRM) is the system level control of co-channel interference and other radio transmission characteristics in mobile communication systems. RRM involves strategies and algorithms for controlling parameters such as the transmit power, the channel allocation, the handover criteria, the modulation scheme, the error coding scheme, etc. The objective is to utilize the limited r neighboring adio spectrum resources and radio network infrastructures as efficiently as possible.

RRM is especially important in systems limited by co-channel interference rather than by noise, for example in networks consisting of many adjacent access points that may reuse the same channel frequencies.

The objective of RRM is therefore to maximize the system spectral efficiency while guaranteeing a certain grade of service. The latter involves covering a certain area and avoiding outage or impairments due to co-channel interference, noise, attenuation caused by long distances, fading caused by shadowing and multi-path, Doppler shift and other forms of distortion. The grade of service is also affected by blocking due to admission control, scheduling starvation or inability to guarantee the requested QoS.

Dynamic RRM schemes adaptively adjust the radio network parameters to the traffic load, user positions, QoS requirements, etc. Dynamic RRM schemes are considered in the design of mobile networks, in view to minimize expensive manual cell planning and achieve tighter frequency reuse patterns, resulting in improved system spectral efficiency. Some schemes are centralized, others are distributed, either autonomous algorithms in eNBs and UEs, or coordinated algorithms by exchanging information between eNBs.

Examples of dynamic RRM schemes are power control algorithms, link adaptation algorithms, Dynamic Channel Allocation (DCA) or Dynamic Frequency Selection (DFS) algorithms, traffic adaptive handover, adaptive filtering (e.g., Single Antenna Interference Cancellation (SAIC)), dynamic diversity schemes (e.g., soft handover, phased array antenna with beam-forming and/or Multiple-Input Multiple-Output (MIMO) communications and/or space-time coding), admission control, dynamic bandwidth allocation using resource reservation multiple access schemes or statistical multiplexing, cognitive radio, etc.

The radio resource controller 160 is for further configuring an ad-hoc measurement policy for all high-speed UEs with an ongoing communication session (see "Meas_Policy(UEX)" in fig. 2).

The high-speed UEs are configured with an A3 measurement event (neighboring becomes offset better than serving) that comprises an hysteresis value HYS1, a Time-To-Trigger (TTT) value TTT1, and a offset value OFF1 greater than or equal to zero. A so-configured UE will report an A3 measurement event whenever the receive power/quality of a reference signal from a neighboring cell is measured as being better than the receive power/quality of a reference signal from the serving cell by the non-negative offset amount OFF1 and for TTT1 seconds. The hysteresis HYS1 prevents excessive toggling between the A3 entering and leaving condition.

The active high-speed UE are further requested to periodically report the receive power/quality of the serving cell and of one or more best neighboring cells from the detection of the A3 measurement event onwards.

The radio resource controller 160 may configure further measurement events for high-speed UEs.

Alternatively, the radio resource controller 160 may configure UEs to periodically report measurements of the serving and neighboring cells, and may by itself compare the periodic measurement reports with the respective measurement event thresholds so as to detect that a particular neighboring cell is fulfilling a particular measurement event condition.

Upon detection of an A3 measurement event for a particular UE and a particular target cell (see "Meas_Event(UEX, CY)"in fig. 2), the radio resource controller 160 checks whether the UE was classified as a high-speed UE by the UE speed characterization unit 140, and further whether the target cell has been characterized as an enclosed pico cell with one or more pre-configured ABS by the neighboring cell characterization unit 150. If so, the radio resource controller 160 does not hand over that particular UE, but re-schedules the UE during an ABS of the pico cell, that is to say during a sub-frame of the macro cell that is time-synchronized with the ABS of the pico cell.

From the detection of the A3 measurement event, the radio resource controller 160 checks the receive power/quality of the pico cell versus the receive power/quality of the macro cell by means of the periodic measurement reports. When the receive power/quality of the reference signal from the macro cell is measured as being better than the receive power/quality of the reference signal 1 from the neighboring pico cell by a second non-negative offset amount OFF2, then the radio resource controller 160 stops scheduling the particular UE during the ABS of the pico cell and uses instead another sub-frame number that has not been flagged as an ABS of the neighboring pico cell. The first and second offset values OFF1 and OFF2 do not necessarily match.

Alternatively, the radio resource controller 160 may use a timer, whose value is set according to an average resting time of high-speed users in the neighboring pico cell or in a representative pico cell. Upon detection of the A3 measurement event, the radio resource controller 160 starts the timer, and stops scheduling the UE during the ABS of the pico cell upon timer expiry.

Still alternatively, the radio resource controller 160 may use a maximum resting time value of high-speed users in the neighboring pico cell or in a representative pico cell.

The representative pico cell can be a modeled pico cell with e.g. a conventional radius, or can be statically determined from a collection of enclosed pico cells deployed within the radio coverage area of the macro cell and/or of further neighboring pico cells, such as previously visited cells reported by a UE during a handover procedure.

The timer value used by the radio resource controller 160 shall be updated whenever the cell characteristics change (e.g., new antenna tilt, new transmit power).

Also, the radio resource controller 160 may issue a request message through the X2 interface to a neighboring eNB operating the neighboring pico cell for activating and deactivating an ABS in the neighboring pico cell. By so doing, the neighboring eNB is notified about the actual usage of the ABS by another eNB, and thus may schedule a mobile device during the corresponding sub-frame in case of e.g. high traffic load situations and provided that ABS is not being used for a high-speed user crossing the pico cell.

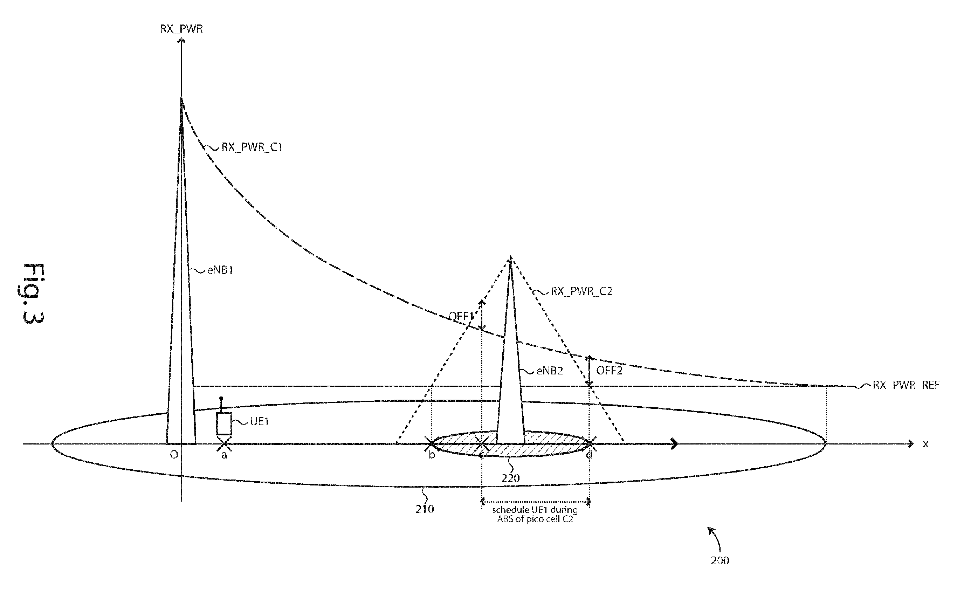

There is seen in fig. 3 a radio coverage area 200 of a mobile communication network across which UEs are moving. The radio coverage area 200 comprises a macro cell C1 having a large-radius radio coverage area 210, and operated by a macro eNB eNB1, and a pico cell C2 having a short-radius radio coverage area 220 enclosed by the radio coverage area 210, and operated by a pico eNB eNB2. The pico cell C2 has one or more pre-configured ABS.

There is further plotted in fig. 3 the downstream receive power (RX_PWR) of a cell reference signal as measured by a UE moving along a line Ox through the radio coverage area 200. A first plot RX_PWR_C1 corresponds to the downlink receive power as measured by the UE of a first cell reference signal transmitted by the macro eNB eNB1 for the macro cell C1 at a first nominal transmit power (long-dashed line), and a second plot RX_PWR_C2 corresponds to the downlink receive power as measured by the UE of a second cell reference signal transmitted by the pico eNB eNB2 for the pico cell C2 at a second nominal transmit power (short-dashed line). Finally, the reference downlink receive power level for achieving a certain SNIR, and thus a certain QoS, is plotted as a bottom straight line RX_PWR_REF (plain line), and ultimately determines the radio coverage area of the respective cells.

A high-speed UE UE1 is assumed to establish a communication session at position a, being an audio call, an audio-video call, or any kind of user data exchange (web browsing, mail synchronization, etc), and then goes along the line Ox through positions b to d.

Alternatively, the UE UE1 may be handed over from a source cell (not shown) towards the macro cell C1, and then go along the line Ox through positions b to d.

The eNB eNB1 characterizes the UE UE1 as being a high-speed UE and configures an appropriate measurement policy for the UE UE1.

At position b, the UE UE1 enters the radio coverage area 220 of the pico cell C2, yet the interference from that cell are still low.

At position c, the UE UE1 reports a A3 measurement event whereby the pico cell C2 was measured as being persistently better than the macro cell C1 by a first non-negative offset OFF1.

As the cell C2 is a pico cell enclosed within the macro cell C1 with one or more pre-configured ABS, and as the UE UE1 is a high-speed UE, the UE UE1 keeps on being served by the macro cell C1, yet is re-scheduled during an ABS of the pico cell C2.

Also, from this position onwards, the UE UE1 periodically reports the receive power of the macro cell C1 and the pico cell C2 as instructed by the eNB eNB1.

At position d, the macro cell C1 is measured as being better than the pico cell C2 by a second non-negative offset OFF2.

From this position onwards, the macro eNB eNB1 stops scheduling the UE UE1 during the ABS of the pico cell C2, and instead uses another sub-frame number that is not flagged as an ABS of the pico cell C2.

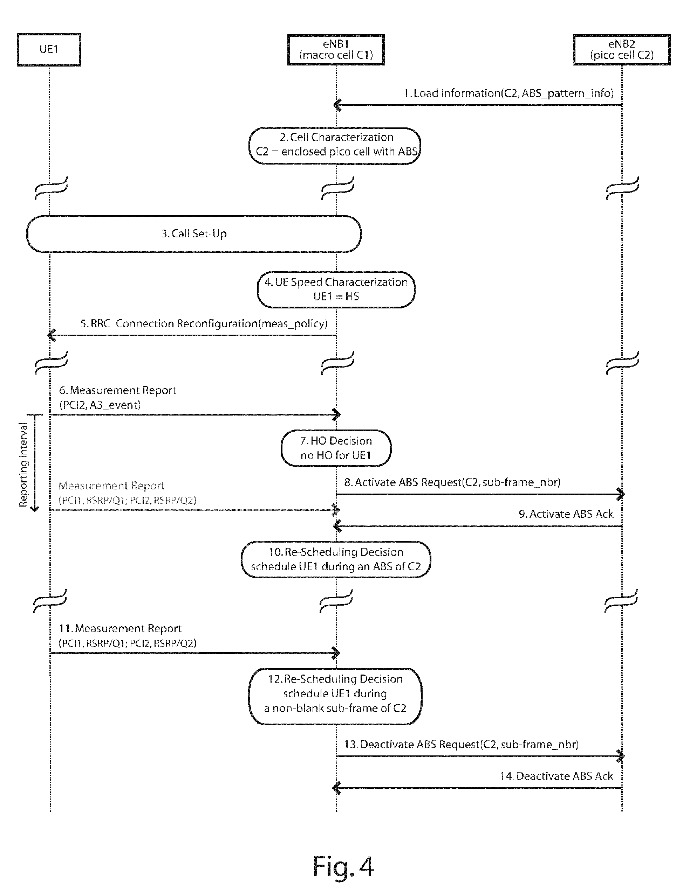

There is seen in fig. 4 a message flow chart representing the most noticeable signaling exchanges between a high-speed UE UE1, a macro eNB eNB1 operating a macro cell C1 as per the present invention, and a pico eNB eNB2 operating a neighboring pico cell C2. The eNBs eNB1 and eNB2 are time-synchronized at frame and sub-frame levels, and have established a neighboring relationship through a X2 interface.

Initially, the eNB eNB1 characterizes the neighboring cells as being pico cells enclosed by the macro cell C1 or not. The eNB eNB1 further determines whether such enclosed pico cells have one or more pre-configured ABS.

Presently, the neighboring cell C2 has been characterized as being a pico cell enclosed by the macro cell C1, and as having at least one pre-configured ABS (see "2. Cell characterization, C2 = enclosed pico cell with ABS" in fig. 4). The eNB eNB1 stores, for further retrieval, the sub-frames number(s) of the pico cell C2 flagged as almost blank in the ABS PATTERN INFO IE of the LOAD INFORMATION message received from the eNB eNB2 (see "1. Load Information(C2, ABS_pattern_info)" in fig. 4).

Further in time, the UE UE1 establishes a radio communication channel within the macro cell C1 operated by the macro eNB eNB1. After random access, the UE UE1 starts exchanging signaling messages with the eNB eNB1 for establishing downlink and uplink RABs for L1 transport of user traffic (see "3. call Set-Up" in fig. 4). The macro cell C1 acts as the serving cell for the UE UE1, and has PCI1 as Physical cell Identifier (PCI).

Alternatively, The UE UE1 may be handed over from a previously visited cell towards the macro cell C1. If so, the eNB eNB1 is prepared by the source eNB with the appropriate radio resources and context for taking over the radio communication session of the UE UE1, and the UE1 re-attaches to the macro cell C1.

The eNB eNB1 characterizes the UE UE1 as being a high-speed or low-speed UE by means of speed information supplied by the UE UE1, and/or by the eNB eNB1, and/or by a source eNB operating a previously visited cell in case of handover of the UE UE1 towards the macro cell C1 (e.g., as derived from the time spent in previous visited cells, or as explicitly encoded by the source eNB). Presently, the UE UE1 is characterized as being a high-speed UE (see "4. UE Speed characterization, UE1 = HS" in fig. 4).

The eNB eNB1 further sends a RRC CONNECTION RECONFIGURATION message to the UE UE1, whereby the UE UE1 is configured with an ad-hoc measurement policy (see "5. RRC Connection Reconfiguration(meas_policy)" in fig. 4).

More specifically, the UE UE1 is configured with an A3 measurement event (neighboring becomes offset better than serving) comprising a generic offset parameter OFF1 for fulfilling the event condition, a hysteresis HYS1 for entering and leaving the event condition, and a TTT1 period during which the event condition shall be fulfilled before reporting the measurement event to the serving eNB.

Also, the UE UE1 is configured to periodically report the receive power/quality of the macro cell C1 and of the pico cell C2 once the A3 measurement event is detected. The number of periodic measurement reports and the reporting interval are configured by the eNB1 as part of the ad-hoc measurement policy.

The UE UE1 measures signal strength and/or signal quality from neighboring cells, and compares them with the respective measurement event thresholds.

At some point in time, the UE UE1 enters the radio coverage area of the pico cell C2. The pico cell cell C2 has PCI2 as PCI. The UE UE1 detects that the receive power/quality of C2 reference signal fulfills the A3 event condition. Consequently, and provided this condition is fulfilled during TTT1 seconds, the UE UE1 sends a MEASUREMENT REPORT message to the serving eNB eNB1 for notifying an A3 measurement event for the target cell C2 (see "6. Measurement Report(PCI2, A3_event)" in fig. 4).

Thereupon, the serving eNB eNB1 makes a decision whether to perform a handover for the UE UE1 from the serving cell C1 towards the target cell C2.

The serving eNB eNB1 determines whether the reporting UE UE1 is a high-speed UE, whether the reported target cell C2 has been characterized as a pico cell with a radio coverage area enclosed by the radio coverage area of the macro cell C1, and whether the target cell C2 has one or more pre-configured ABS.

If so, the serving eNB makes a negative handover decision and keeps the UE UE1 served by the macro cell C1 (see "7. HO Decision, no HO for UE1).

The eNB eNB1 retrieves a sub-frame number of the pico cell C2 that has been flagged as almost blank and that is not being used for another high-speed UE, and re-schedules the UE UE1 during that sub-frame number (see "10. Re-Scheduling Decision, Schedule UE1 during an ABS of C2" in fig. 4). The eNB eNB1 may schedule the UE UE1 during two or more ABSs of the pico cell C2 in case the communication session requires a high data throughput.

Prior to the UE re-scheduling, the eNB eNB1 may explicitly request the eNB eNB2 to activate the corresponding ABS for use by the high-speed UE UE1 (see "8. Activate ABS Request(PCI2, sub-frame_nbr)" in fig. 4). The eNB eNB2 acknowledges the correct activation of the required ABS (see "9. Activate ABS Ack" in fig. 4).

Also, from the detection of the A3 measurement event, the UE UE1 starts reporting periodically the receive power/quality RSRP/Q1 of the macro cells C1 and the receive power/quality RSRP/Q2 of the pico cell C2. The UE1 may also report the receive power/quality of further neighboring cells.

The eNB eNB1 uses these periodic measurement reports to monitor the receive power/quality of C2 reference signal versus the receive power/quality of C1 reference signal.

Further in time, the UE UE1 leaves the radio coverage area of the pico cell C2. Upon receipt of a particular periodic measurement report (see "11. Measurement Report(PCI1, RSRP/Q1; PCI2, RSRP/Q2)" in fig. 4), the eNB eNB1 detects that the receive power/quality of C2 reference signal is below the receive power/quality of C1 reference signal by a second offset OFF2. Thereupon, the eNB eNB1 stops scheduling the UE UE1 during an ABS of the pico cell C2, and uses instead another sub-frame number that has not been flagged as an ABS of the pico cell C2 (see "12. Re-Scheduling Decision, Schedule UE1 during a non-blank sub-frame of C2" in fig. 4). By so doing, this pico cell ABS can be re-used for another high-speed UE.

The eNB eNB1 may wait for a certain number of such measurement reports, i.e. whereby the pi co cell C2 was measured as being worst than the macro cell C1 by the offset OFF2, before re-scheduling the UE UE1 during a non-blank sub-frame of the pico cell C2.

If applicable, the eNB eNB1 requests the eNB eNB2 to deactivate the previously activated ABS of the pico cell C2 for use by the high-speed UE UE1 (see "13. Deactivate ABS Request(PCI2, sub-frame_nbr)" in fig. 4), and the eNB eNB2 acknowledges the correct deactivation of the ABS (see "14. Deactivate ABS Ack" in fig. 4).

In an alternative embodiment of the present invention, the eNB eNB1 does not configure any periodic measurement reporting, but instead starts a timer upon detection of the A3 measurement event. The timer value is equal to an average resting time of high-speed users in the pico cell C2 or in a representative pico cell, or is equal to a maximum resting time of high-speed users in the pico cell C2 or in a representative pico cell.

Upon timer expiry, the eNB eNB1 stops scheduling the UE UE1 during an ABS of the pico cell C2, and uses instead another sub-frame number that has not been flagged as an ABS of the pico cell C2.

Although the above description has made exhaustive references to LTE technology and terminology, the present invention is equally applicable to, and advantageous for, other mobile communication technologies such as Global System Mobile (GSM), Code Division Multiple Access (CDMA), Universal Mobile Terrestrial System (UMTS), etc.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

## Claims

1. **A radio access arrangement** (100) for operating **a macro cell** (C1) having **a large radio coverage** area (210), and comprising:
- **a radio transceiver** (110) for setting up **a radio communication channel** with **a particular mobile device** (UE1),
- **speed characterization logic** (140) for characterizing the particular mobile device as being a high-speed mobile device according to **speed information** (Speed_Info1/2/3) indicative of **a speed** of the particular mobile device,
- **a radio resource controller** (160) for detecting **a measurement event** for the particular mobile device whereby **a neighboring cell** (C2) was measured as being offset better than the macro cell,
*wherein* the radio access arrangement further comprises **cell characterization logic** (150) for characterizing the neighboring cell as having **a substantially shorter radio coverage area** (220) enclosed by the large radio coverage area, and further as having **a blank communication time slot** with reduced or no transmission power,
*and wherein* the radio resource controller is further configured, upon detection of the measurement event, to keep the particular mobile device served by the macro cell and to re-schedule the particular mobile device during the blank communication time slot of the neighboring cell.

2. **A radio access arrangement** (100) according to claim *1, wherein* the radio access arrangement further comprises **measurement configuration logic** (160) for configuring a **measurement policy** (Meas_Policy) for the particular mobile device whereby **periodic measurements** of the macro cell and the neighboring cell are to be reported from the detection of the measurement event onwards,
*and wherein* the radio resource controller is further configured to detect **a subsequent measurement event** for the particular mobile device whereby the macro cell was measured as being offset better than the neighboring cell, and upon detection of the subsequent measurement event, to stop scheduling the particular mobile device during the blank communication time slot of the neighboring cell.

3. **A radio access arrangement** (100) according to claim *1, wherein* the radio resource controller is further configured to stop scheduling the particular mobile device during the blank communication time slot of the neighboring cell upon expiry of **an average or maximum resting times** of high-speed mobile devices in the neighboring cell or in a representative pico cell.

4. **A radio access arrangement** (100) according to any of claims 1 to 3, *wherein* the radio access arrangement further comprises **communication means** for, upon detection of the measurement event, requesting **a neighboring radio access node** (eNB2) operating the neighboring cell to activate the blank communication time slot.

5. **A radio access arrangement** (100) according to any of claims 1 to 4, *wherein* the neighboring cell is characterized as having a substantially shorter radio coverage area enclosed by the large radio coverage area by detecting back and forth handovers between the macro cell and the neighboring cell within **a reference resting time.**

6. **A radio access arrangement** (100) according to any of claims 1 to 4, *wherein* the neighboring cell is characterized as having a substantially shorter radio coverage area enclosed by the large radio coverage area by means of **pre-configured** cell **information.**

7. **A radio access arrangement** (100) according to any of claims 1 to 6, *wherein* the neighboring cell is characterized as having the blank communication time slot by means of **a status message** received from **a neighboring radio access node** (eNB2) operating the neighboring cell.

8. **A radio access arrangement** (100) according to any of claims 1 to 6, *wherein* the neighboring cell is characterized as having the blank communication time slot by means of **further pre-configured cell information.**

9. **A radio access arrangement** (100) according to any of claims 1 to 8, *wherein* the speed information comprises resting times **of** the particular mobile device in **previously visited cells.**

10. **A radio access arrangement** (100) according to any of claims 1 to 9, *wherein* the radio access arrangement forms part of **a radio access node** (eNB1) operating the macro cell.

11. **A radio access arrangement** according to any of claims 1 to 9, *wherein* the radio access arrangement forms part of **a radio access node** operating the macro cell, and of **a radio access controller** controlling the operation of the radio access node.

12. **A method** for managing mobility within **a macro cell** (C1) having **a large radio coverage area** (210), and comprising the steps of:
- setting up **a radio communication channel** with **a particular mobile device** (UE1),
- characterizing the particular mobile device as being a high-speed mobile device according to **speed information** (Speed_Info1/2/3) indicative of **a speed** of the particular mobile device,
- detecting **a measurement event** for the particular mobile device whereby **a neighboring cell** (C2) was measured as being offset better than the macro cell,
*wherein* the method further comprises the steps of:
- characterizing the neighboring cell as having **a substantially shorter radio coverage area** (220) enclosed by the large radio coverage area, and further as having **a blank communication time slot** with reduced or no transmission power,
- upon detection of the measurement event, keeping the particular mobile device served by the macro cell and re-scheduling the particular mobile device during the blank communication time slot of the neighboring cell.
